# EUROPÄISCHE PATENTANMELDUNG

(11) **EP 4 417 570 A1**
(43) Veröffentlichungstag der Anmeldung: **21.08.2024**
(21) Anmeldenummer: 24158014.1
(22) Anmeldetag: 16.02.2024
(51) Int. Cl.: B67D 7/64

(54) **ENTLEERUNGSSYSTEM ZUM ENTLEEREN VON PASTÖSEM MATERIAL AUS FASSARTIGEN BEHÄLTERN**

(30) Priorität: 20.02.2023 DE 102023104133
(71) Anmelder: NETZSCH Pumpen & Systeme GmbH, 95100 Selb (DE)
(72) Erfinder: Wagner, Stefan, 84431 Heldenstein (DE); Grainer, Egon, 84431 Heldenstein (DE); Schöberl, Stefan, 84428 Buchbach (DE); Untergehrer, Stefan, 84149 Velden (DE)

(57) **Zusammenfassung**

Entleerungssystem zum Entleeren von pastösem Material aus fassartigen Behältern mit einer - bevorzugt stempelartig in das Behälterinnere absenkbaren - Fassfolgeplatte, die eine Abzugsöffnung aufweist, mit einer mit der Abzugsöffnung in Wirkverbindung stehenden Pumpe zum Abziehen des im Sammelraum zwischen Fassboden und Fassfolgeplatte eingeschlossenen Materials, wobei in dem Sammelraum mindestens ein Agitator vorgesehen ist, der dem im Sammelraum eingeschlossenen Material eine Bewegung relativ zur Fassfolgeplatte aufzwingt.

## Beschreibung

### GEBIET DER ERFINDUNG

Die Erfindung betrifft ein Entleerungssystem zum Entleeren von pastösem Material aus bevorzugt fassartigen Behältern nach dem Oberbegriff des Anspruchs 1, sowie ein Verfahren zum Entleeren von pastösem Material aus fassartigen Behältern.

### TECHNISCHER HINTERGRUND

Mithilfe herkömmlicher Entleerungssysteme für pastöses Material können bereits viskose Materialien aus Behältern, bevorzugt fassartigen Behältern, entleert werden. Dies erfolgt meist mittels einer Pumpe und einer Fassfolgeplatte. Hierbei wird die Fassfolgeplatte, welche eine Abzugsöffnung aufweist, nach unten - in Richtung des Materials - gedrückt, wobei die Pumpe gleichzeitig das Material durch die Abzugsöffnung aus dem Behälter saugt. Bei höher viskosen Materialien wird das Material zunächst oftmals beheizt, um die Viskosität zu verringern und die Fließfähigkeit zu steigern.

Bei einigen Materialien reicht jedoch auch die Erwärmung des Materials in Kombination mit der Pumpleistung nicht mehr aus, um das hochviskose Material aus dem Behälter zu fördern. In diesem Fall ist das Material nicht fließfähig oder nicht fließfähig genug und bewegt sich somit eigentlich nicht zur Abzugsöffnung.

### AUFGABE DER ERFINDUNG

Dementsprechend ist es die Aufgabe der Erfindung, ein Mittel anzugeben, mit welchem hochviskose Materialien, bevorzugt sogar welche, die mit dem Stand der Technik nicht aus einem Behälter gefördert werden können, aus einem Behälter gefördert werden können.

### ERFINDUNGSGEMÄSSE LÖSUNG

Eine Lösung dieser Aufgabe bietet der erste Hauptanspruch.

Hierzu wird ein Entleerungssystem zum Entleeren von pastösem Material aus bevorzugt fassartigen Behältern mit einer stempelartig in das Behälterinnere absenkbaren Fassfolgeplatte vorgeschlagen. Bevorzugt wird die Fassfolgeplatte selbst bewegt und in das Behälterinnere eingefahren. Alternativ kann aber auch der Fassboden in Richtung auf die ruhend bleibende Fassfolgeplatte zugefahren werden, sodass "nur" eine entsprechende Relativbewegung entsteht - was ausreichend sein kann, auch wenn das nicht bevorzugt ist. Das Fass kann dabei - insbesondere, wenn sog. "Clay", also Modelliermasse, im Prototypen- oder Karosserieprototypenbau zu bewältigen ist - auf seinem Boden stehen, Überkopf mit der Fassöffnung nach unten hängen (bevorzugt) oder auf der Seite liegen, wobei Letztes nicht bevorzugt ist. Dabei weist die Fassfolgeplatte eine vorzugsweise zentrale Abzugsöffnung auf und ist im soeben erstgenannten Fall idealerweise so ausgestaltet und beweglich gelagert, dass sie in vertikaler Richtung in einen fassartigen Behälter eingefahren werden kann, von oben nach unten in Richtung von dessen Längsachse.

Darüber hinaus umfasst das Entleerungssystem eine Pumpe zum Abziehen des im Sammelraum zwischen Fassboden und Fassfolgeplatte eingeschlossenen Materials, wobei die Pumpe mit der Abzugsöffnung in Wirkverbindung steht und das Material bevorzugt aus dem Sammelraum über die Abzugsöffnung absaugt.

Das Entleerungssystem zeichnet sich dadurch aus, dass in dem Sammelraum mindestens ein Agitator vorgesehen ist, der dem im Sammelraum eingeschlossenen Material eine Bewegung relativ zur Fassfolgeplatte aufzwingt.

Das vom Agitator behandelte Material ist hierbei idealerweise derart hochviskos, dass es sich allein durch Pumpen im zersetzungsfrei erwärmten Zustand nicht absaugen lässt. Der Agitator ist idealerweise so beschaffen, dass das von ihm zu behandelnde, zum Abpumpen bestimmte Material vom Agitator eine Bewegung aufgezwungen bekommt, die dazu führt, dass sich die Viskosität des Materials zumindest zeitweilig verringert
Der Agitator führt dazu, dass das Material oder bevorzugt Teile des Materials relativ zur Fassfolgeplatte bewegt werden. Durch diese Relativbewegung wird die Viskosität des Materials oder zumindest von Teilen des Materials herabgesetzt, bevorzugt durch eine Scherung oder dadurch, dass Teile aus dem Oberflächenbereich des Materials im Sammelraum aufgelockert und/oder vom Rest des Materials zumindest im Wesentlichen getrennt werden. Infolgedessen kann das Material oder zumindest Teile des Materials von der Pumpe abgesaugt werden und zwar durch die Fassfolgeplatte hindurch, meist nach oben, in einen Bereich oberhalb der Fassfolgeplatte.

Fassartige Behälter im Sinne des hier Beschriebenen sind Behälter, die einen geschlossenen Boden und im Regelfall eine selbsttragende Seitenbegrenzung sowie eine dem Boden gegenüberliegende Entnahmeöffnung aufweisen, die im Regelfall nicht oder nicht wesentlich eingezogen ist, sondern das Behälterinnere vollständig freigibt. Die selbsttragende Eigenschaft ist jedenfalls so ausgeprägt, dass die Seitenbegrenzung unter dem Einfluss der Reibungskräfte, die ihr die Fassfolgeplatte beim Absenken in den fassartigen Behälter mitteilt, nicht kollabiert. Der Begriff "fassartiger Behälter" ist in seinem weiteren Sinne nicht auf Fässer im eigentlichen Sinne beschränkt, sondern kann auch eckige Tanks oder irgendwelche anderen Vorratsbehälter umfassen, in denen das zu pumpende Material bis zu seiner Ansaugung durch die Pumpe vollständig oder im Wesentlichen unbewegt ruht. Der Begriff hat aber auch eine bevorzugte, engere Bedeutung in dem Sinne, dass ein fassartiger Behälter so beschaffen ist, dass er überall oder zumindest eine Reihe von im Wesentlichen runden Querschnitten zeigt, wenn man ihn in unterschiedlicher Höhe senkrecht zu seiner Längs- bzw. Rotationsachse schneidet.

In manchen, aber seltenen Fällen liegt die Fassfolgeplatte nicht gegen die Seitenbegrenzung des fassartigen Behälters selbst an, sondern gegen einen diesen auskleidenden Sack oder Beutel, den es zu entleeren gilt und dessen oberes Ende dann hinreichend fest an dem fassartigen Behälter festgelegt ist, sodass es gelingt, den Sack oder Beutel innenseitig auszustreifen und im Zuge dessen zu entleeren. In einem solchen Fall müssen der oder die Agitatoren genügend radialen Abstand vom Sack oder Beutel halten, um diesen nicht zu erfassen.

In vielen, bevorzugten Fällen ist es so, dass die Fassfolgeplatte durch ihr kontinuierliches weiter Eintauchen in den fassartigen Behälter das abzupumpende Material stets unter einer gewissen Vorspannung bzw. einem gewissen Druck hält und dadurch das Material dazu motiviert, durch die Abzugsöffnung der Fassfolgeplatte hindurch dem Pumpenansaugbereich zuzustreben.

Der genaue physikalische Effekt, der der Erfindung zugrunde liegt, ist noch nicht abschließend untersucht worden. Man kann aber in erster Näherung Folgendes sagen: Der hoch bevorzugte Effekt der Erfindung ist der, dass die erfindungsgemäße Agitation mit den hierzu notwendigen Mitteln derart ausgeführt wird, dass dem zu pumpenden Material im Einzugs- bzw. Ansaug- oder Eingangsbereich der Pumpe (idealerweise im Wesentlichen nur dort) eine mehr als nur unwesentliche Scherrate aufgezwungen wird. Die Scherrate ist derart stark, dass das Material dort eine Scherverdünnung erfährt und damit eine mehr als nur unwesentliche Herabsetzung der örtlichen Viskosität erreicht wird. In erster Näherung kann man sich das so vorstellen, dass durch die Scherung der interne Zusammenhalt des zu pumpenden Materials verringert wird - bei aus langkettigen Molekülen bestehenden Materialien beispielsweise dadurch, dass Molekülverknäulungen auseinandergezogen werden. Besonders ausgeprägt scheint der Effekt dort zu sein, wo Nicht-Newton'sche Fluide gepumpt werden sollen, weshalb die Erfindung besonders gut zu verwenden ist, um solche in pumpfähigen Zustand zu versetzen.

In vielen Fällen kann man sagen, dass der erfindungsgemäße Agitator bevorzugt so gestaltet ist, dass er nur den Bereich oberste Ebene bzw. den Oberflächenbereich der zu fördernden Masse oder des zu fördernden Materials in eine Bewegung, bevorzugt im Wesentlichen in eine Abgleit- bzw. Scherbewegung, versetzt.

### BEVORZUGTE AUSGESTALTUNGSMÖGLICHKEITEN DER ERFINDUNG

Eine bevorzugte Ausführungsform des Entleerungssystem besteht darin, dass der Agitator mindestens eine - sich bevorzugt im Wesentlichen radial zu der Mittellängsachse des zu entleerenden Behälters ersteckende - Scherleiste ist, die an der dem Sammelraum zugewandten Stirnfläche der Fassfolgeplatte befestigt ist und von dort aus in den Sammelraum ragt. Mittels dieser Scherleiste lassen sich Teile des Materials aus dem Oberflächenbereich des Materials im Sammelraum abscheren und/oder auflockern. Zudem führt die Scherleiste das so aufgelockerte und/oder abgescherte Material im Zuge der Relativbewegung zur Abzugsöffnung und erleichtert so weiterhin das Absaugen des Materials.

Darüber hinaus ist es besonders bevorzugt, wenn die Fassfolgeplatte rotationsfest gehalten ist und das Entleerungssystem einen rotierend antreibbaren Behälterträger aufweist. Dies stellt eine einfache Möglichkeit dar, die Relativbewegung zwischen Fassfolgeplatte, bevorzugt mit fest an ihr befestigten Scherleisten, oder Scherleisten und Material im Sammelraum herzustellen.

Zudem ist es besonders bevorzugt, wenn der Agitator mindestens eine - sich bevorzugt im Wesentlichen radial zu der Mittellängsachse des zu entleerenden Behälters ersteckende - Scherleiste ist, die mitrotierend an einem Wirkfortsatz des Pumpenrotors gehalten ist, der durch die Fassfolgeplatte hindurch, bevorzugt durch deren Abzugsöffnung hindurch, in den Sammelraum hineinragt, wobei der zu entleerende Behälter vorzugsweise rotationsfest gehalten wird. Dies stellt eine weitere einfache Möglichkeit dar, die Relativbewegung zwischen Material und Fassfolgeplatte zu gewährleisten, indem die ohnehin notwendige Drehbewegung des Pumpenrotors genutzt wird, um eine Drehbewegung der mindestens einen Scherleiste zu gewährleisten.

Eine weitere bevorzugte Ausführungsform besteht darin, dass der besagte Wirkfortsatz mit dem Pumpenrotor über ein Getriebe verbunden ist, sodass er mit gegenüber dem Pumpenrotor veränderter Drehzahl rotiert. Hierzu wird bevorzugt ein Planetengetriebe oder ein ähnlich arbeitendes Getriebe verwendet.

Darüber hinaus ist es besonders bevorzugt, wenn die mindestens eine Scherleiste auf ihrer unmittelbar dem Behälterboden zugewandten Stirnseite einen Zinnenkranz trägt. Bevorzugt weist dieser Zinnenkranz in Richtung der Behälterlängsachse tiefer in den Sammelraum hineinragende Zinnen und dazwischen befindliche Scharten auf. So teilt und/oder zerreißt der Zinnenkranz das zu entleerende Material zumindest teilweise und verringert dadurch die Viskosität des Materials.

Weiterhin ist es besonders bevorzugt, wenn mehrere Scherleisten mit Zinnenkranz vorgesehen sind, und die Zinnen der in Drehrichtung nachfolgenden Scherleiste eine mehr als nur unwesentlich abweichende Radialposition einnehmen als die Zinnen der vorangehenden Scherleiste. Die nachfolgenden Zinnen bewegen sich bei der Wahl dieser Anordnung bei der Drehbewegung der Scherleisten somit nicht in den gleichen Bahnen, die die vorhergehenden Zinnen schon geschaffen haben, wodurch sie das Material nicht mehr oder zumindest nicht mehr wesentlich lockern würden.

Darüber hinaus ist es besonders bevorzugt, wenn die in Rotationsrichtung voreilende Seite der mindestens einen Scherleiste konkav gekrümmt ist. Diese Form verbessert das Sammeln und Konzentrieren von zu entleerender Masse und führt bei der Drehbewegung der Scherleiste das Material der bevorzugt zentral in der Fassfolgeplatte vorhandenen Abzugsöffnung zu, bewirkt also im Ergebnis eine Materialverfrachtung in radial einwärtiger Richtung.

Des Weiteren ist es besonders bevorzugt, wenn das Ende der mindestens einen Scherleiste bis unmittelbar an die Abzugsöffnung heranreicht - bevorzugt sogar mit ihrem lichten Querschnitt überlappt - und idealerweise in etwa bzw. im Wesentlichen tangential zu der Leibung der Abzugsöffnung ausläuft. Das zu entleerende Material, das von der Scherleiste aufgestaut wird, wird so besonders effizient der Abzugsöffnung zugeleitet und dem dahinterliegenden Pumpensog übergeben.

Eine weitere bevorzugte Ausführungsform besteht darin, dass die Fassfolgeplatte auf ihrer dem Sammelraum zugewandten Seite vollständig oder überwiegend kegelig ausgeführt ist, sodass die radialen Außenränder der Fassfolgeplatte ihrer Abzugsöffnung beim Absenken in den Behälter voraneilen, bevorzugt mit einem Kegelwinkel zwischen weniger als oder in etwa 1° und maximal 10°, besser nur maximal 5°.

Zudem ist es besonders bevorzugt, wenn die Fassfolgeplatte an ihrem Außenumfang eine Flachdichtung trägt, und vorzugsweise eine Lippendichtung bildende Flachdichtung, die beim Absenken entgegen der Absenkrichtung umgebogen wird. Für deren radiale Breite B und axiale Dicke D - bezogen auf die Längsachse des zu entleerenden Behälters, die die Axialrichtung bildet - gilt bevorzugt folgendes Verhältnis: B < 2 x D.

Weitere Ausgestaltungsmöglichkeiten, Wirkungsweisen und Vorteile ergeben sich aus der Beschreibung des Ausführungsbeispiels und/oder anhand der Figuren.

### FIGURENLISTE

Die Figur 1 zeigt eine Anlage mit zwei parallel betreibbaren Entleerungssystemen in dreidimensionaler Ansicht.
Die Figur 2 zeigt eine Fassfolgeplatte mit Scherleisten in Unteransicht.
Die Figur 3 zeigt eine Fassfolgeplatte mit Scherleisten in dreidimensionaler Ansicht von unten.
Die Figur 4 zeigt eine Fassfolgeplatte mit Scherleisten in dreidimensionaler Ansicht von unten, wobei die Fassfolgeplatte an einer Hohlsäule einer Pumpe befestigt ist - wobei die Hohlsäule bevorzugt der Stator der Exzenterschneckenpumpe ist.
Die Figur 5 zeigt eine Fassfolgeplatte dreidimensionaler Ansicht von oben, wobei die Fassfolgeplatte an einer Hohlsäule einer Pumpe befestigt ist.
Die Figur 6 zeigt den rotierend angetriebenen Behälterträger des Entleerungssystems in dreidimensionaler Ansicht.
Die Figur 7 zeigt ein zweites Ausführungsbeispiel einer Fassfolgeplatte mit Scherleisten in dreidimensionaler Ansicht von unten, wobei die Fassfolgeplatte an einer Hohlsäule einer Pumpe befestigt ist. Angemerkt sei an dieser Stelle, dass Scherleisten in ganz unterschiedlichen Anzahlen, Ausführungen, Konturen und Längen möglich sind, abweichend von den in diesem Ausführungsbeispiel aufgezeigten, bevorzugten Ausführungsformen.
Die Figur 8 zeigt das zweite Ausführungsbeispiel einer Fassfolgeplatte aus Fig. 7 in dreidimensionaler Ansicht von oben.
Die Figur 9 zeigt ein Entleerungssystem mit abgesenkter Fassfolgeplatte in teilweise geschnittener Frontansicht.
Die Fig. 10 zeigt eine Einhausung für das erfindungsgemäße Entleerungssystem bzw. ein übergeordnetes System hieraus im Vertikalebenenschnitt.
Die Fig. 11 zeigt eine Vorderansicht dessen von vorne und außen, was die Fig. 10 zeigt.

### BEVORZUGTE AUSFÜHRUNGSBEISPIELE

Ausgangspunkt der Erfindung sind wie oben erläutert hochviskose, nicht fließfähige und in diesem Zustand nicht pumpbare Materialien (z.B. Clay, Modelliermasse) in einem fassartigen Behälter 2. Das Material kann im Behälter 2 in mehreren Formen vorliegen. So kann der Behälter 2 beispielsweise vollständig gefüllt sein, das Material kann sich im Extremfall als Stangenmaterial im Behälter 2 befinden, aber auch in Brocken- oder Partikelform, ggf. sogar in der Form von Spänen.

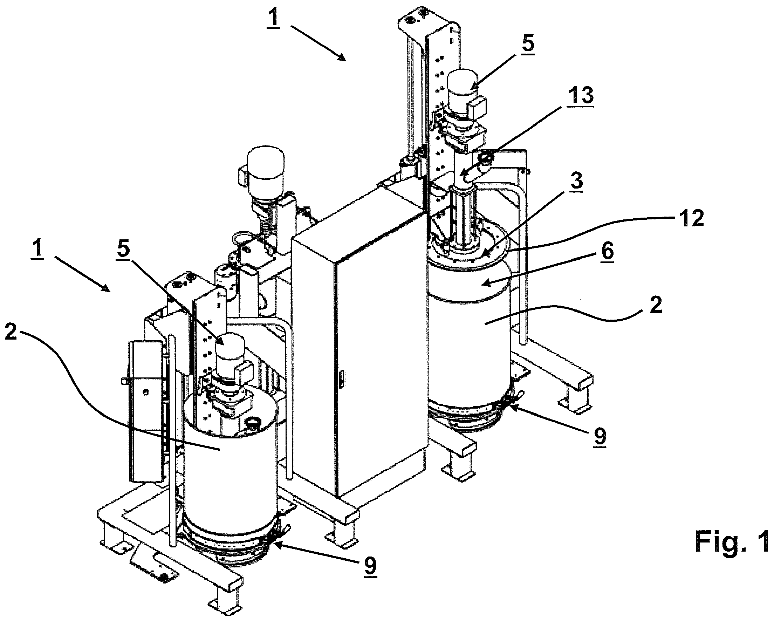

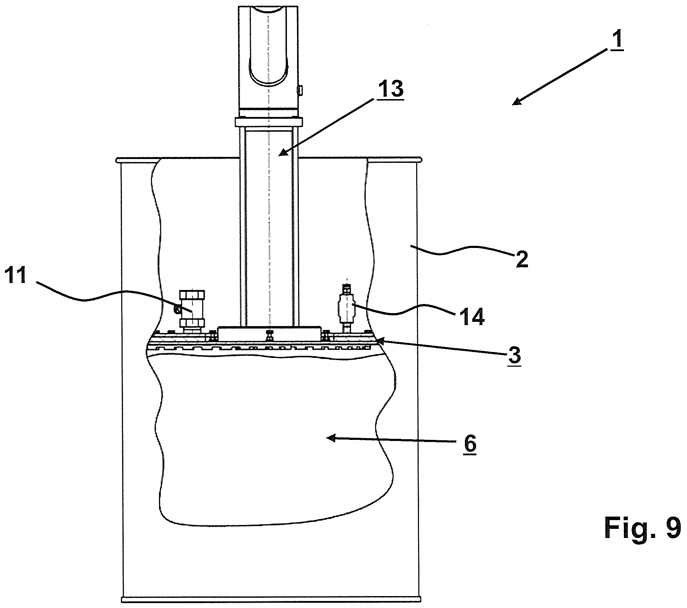

Zunächst zeigt Fig. 1 eine Anlage mit zwei parallel betreibbaren Entleerungssystemen 1, welche jeweils eine Pumpe mit heb- und senkbarer Hohlsäule 13 aufweisen, die bevorzugt auch gleich das Statorgehäuse der Exzenterschneckenpumpe bildet oder in dieses übergeht. Von der in diesem Ausführungsbeispiel verwendeten Pumpe ist in Fig. 1 der vorzugsweise am obersten Ende der Hohlsäule angeflanschte Motor 5 zu sehen - während sich die im vorliegenden Fall die eigentliche Pumpwirkung erzeugende Exzenterschnecke innerhalb der Hohlsäule 13 befindet und daher von außen nicht sichtbar ist. Diese Hohlsäule 13 ist hierbei an einer Fassfolgeplatte 3 befestigt; bevorzugt so, dass sie die bevorzugt zentrale Abzugsöffnung 4 der Fassfolgeplatte 3 einseitig umschließt. Die Fassfolgeplatte 3 umfasst zudem bevorzugt eine Flachdichtung 12, welche sich am Außenradius der Fassfolgeplatte 3 befindet und beim Senk- und Hebevorgang der Fassfolgeplatte 3 an der Behälterinnenwand entlanggleitet. Wird die Fassfolgeplatte 3 mittels des Hebe- und Senkmechanismus der Hohlsäule 13 nach unten auf das Material gedrückt, entsteht so ein Sammelraum 6 im Behälter 2 zwischen Fassfolgeplatte 3 und Behälterboden, wobei in diesem Sammelraum 6 das zu entleerende Material ist. Die Fassfolgeplatte 3 umfasst darüber hinaus bevorzugt einen Agitator 7, auf welchen im weiteren Verlauf noch näher eingegangen wird. Diese beschriebene bevorzugte Ausführungsform eines Entleerungssystems 1 kann auch in Fig. 9 erkannt werden, wobei hier der Sammelraum 6 zwischen Fassfolgeplatte 3 und Behälterboden durch die Schnittansicht besser dargestellt ist.

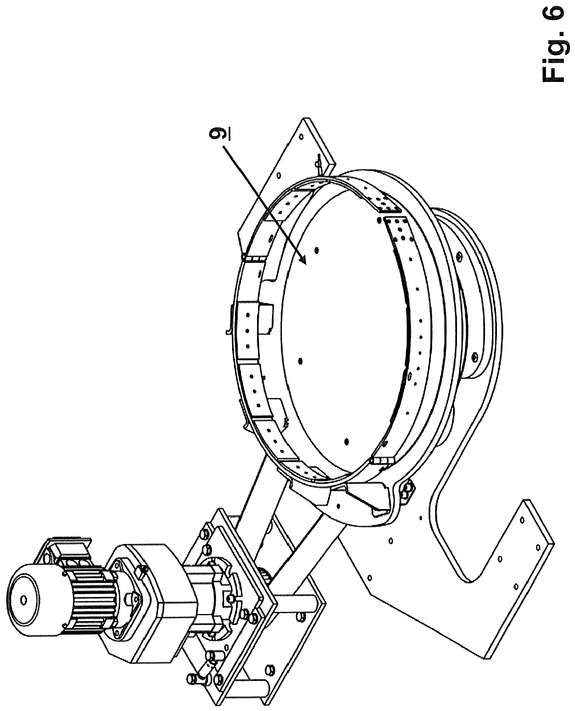

Bevorzugt ist der Behälter 2 auf einem Behälterträger 9 gelagert, der rotierend angetrieben wird (siehe auch Fig. 6). Dies geschieht bevorzugt mittels eines Motors, eines Riemens und einer Riemenscheibe, die wiederum die Vorrichtung, auf der der Behälter 2 steht, antreibt. Alternativ, aber nicht bevorzugt, sind auch ein Ketten- oder ein Reibradantrieb möglich, eventuell auch ein Getriebeantrieb. So dreht sich der Behälter 2 während des Entleervorgangs bevorzugt, um eine Relativbewegung zwischen stationärer Fassfolgeplatte 3 und Material im Behälter 2 zu gewährleisten.

Es sei jedoch erwähnt, dass diese Drehbewegung bzw. Relativbewegung auch auf andere Arten erreicht werden kann. So ist es beispielsweise möglich, dass der Behälter 2 stillsteht und sich nur der Agitator 7 dreht. Dies könnte erreicht werden, indem der Agitator 7 fest mit der Fassfolgeplatte 3 verbunden ist. Diese Fassfolgeplatte 3 würde dann mit einer entsprechenden Drehvorrichtung gedreht und somit die Relativgeschwindigkeit zwischen Material und Agitator 7 erzeugen. Diese eher theoretische Lösung soll hier aus patentrechtlichen Gründen zunächst auch mitbeansprucht sein, obwohl sie einigen Mehraufwand erzeugt.

Im Rahmen einer klar bevorzugten Ausführungsform ist es so, dass der Agitator 7 nicht mit der Fassfolgeplatte 3 verbunden ist und die Fassfolgeplatte 3 nicht drehbar ist. Aufgrund der technischen Gegebenheiten der verwendeten Pumpe 5 ist es bei dieser Variante möglich, den Agitator 7 direkt an den Pumpenrotor anzubringen. Somit ist, auch auf Fassseite, nicht zwingend eine zusätzliche Drehvorrichtung notwendig, weil die Drehbewegung des Agitators 7 direkt über die Drehbewegung des Pumpenrotors, bevorzugt dem Rotor einer Exzenterschneckenwelle, eingebracht werden kann - unbeschadet der Möglichkeit sich summierender Drehbewegungen des fassartigen Behälters und des Agitators.

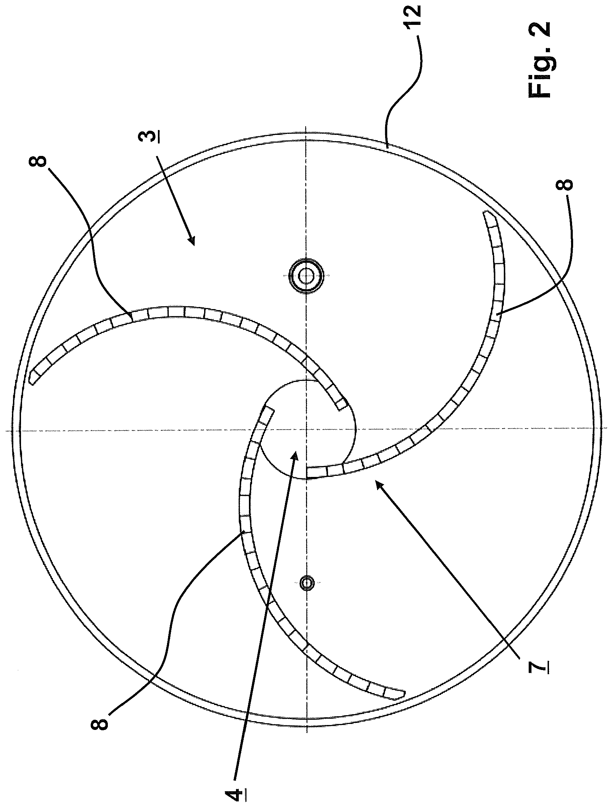

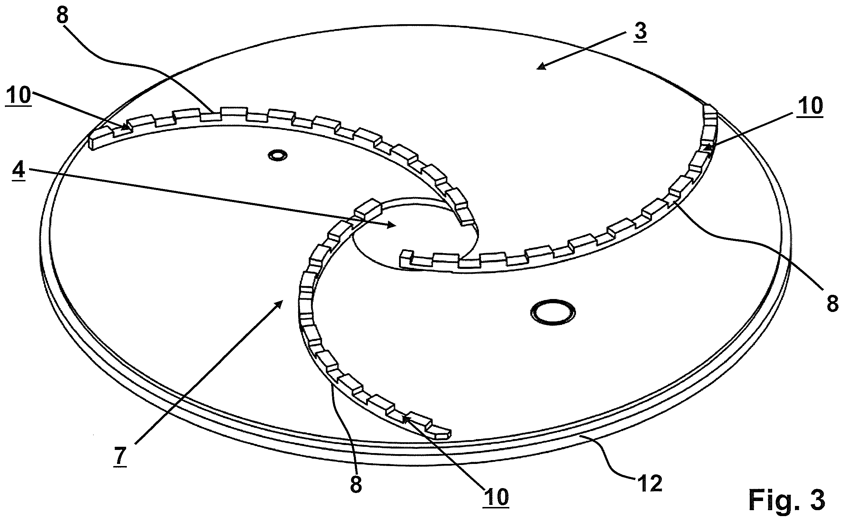

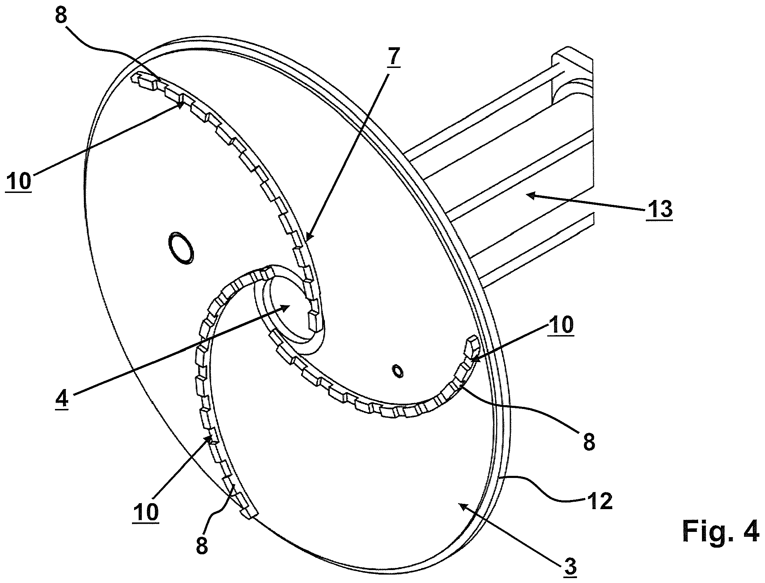

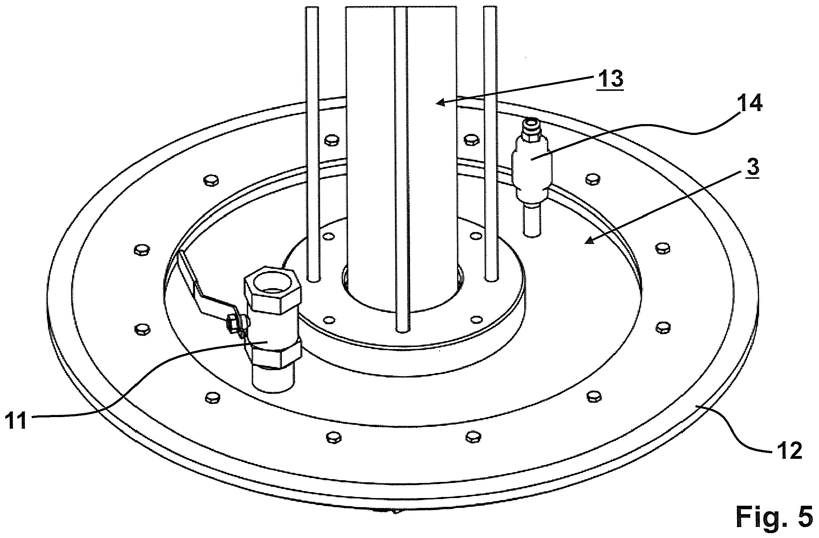

Eine erste bevorzugte Version des Agitators 7 kann in den Fig. 2 bis Fig. 5 erkannt werden. Der Agitator 7 besteht hierbei bevorzugt aus mindestens zwei, bevorzugt sogar mindestens drei Scherleisten 8, welche (zumindest meist) wiederum jeweils einen Zinnenkranz 10 tragen. In dem gezeigten bevorzugten Ausführungsbeispiel sind die Scherleisten 8 fest mit der Fassnachfolgeplatte 3 verbunden.

Durch diverse Testreihen wurde herausgefunden, dass die Viskosität des Materials durch Scheren abnimmt, was die Scherleisten 8 in Kombination mit der oben angesprochenen Relativbewegung gewährleisten. Die Zinnenkränze 10 sind hierbei so versetzt angeordnet, dass dauerhaft Scherkräfte in das Material eingeführt werden, sofern die Fassfolgeplatte 3 auf dem Material aufliegt. Die Kombination aus der Drehbewegung und den speziell angeordneten Scherleisten 8 erzeugt eine sehr hohe Scherung im Material, sodass die Viskosität weiter herabgesetzt wird. Des Weiteren sind diese Scherleisten 8 so angeordnet, dass sie auch gleichzeitig das Material in Richtung der Saugöffnung der Pumpe bzw. der Abzugsöffnung 4 befördern.

Damit ist es möglich, extrem hochviskose Materialien aus einem Behälter 2 zu fördern. Um eine weitere Optimierung zu erreichen, sollte darauf geachtet werden, das Verhältnis zwischen Pumpendrehzahl und der Relativdrehzahl zwischen Material und Fassfolgeplatte 3 mit dem Agitator 7 besonders günstig einzustellen. Die optimale Drehzahl von sowohl Pumpe 5 als auch der Dreheinheit ist abhängig von der Gestaltung der Scherleisten 8, dem Vorschub, der Pumpengröße/-ausführung bzw. der wegzufördernden Menge an Material. In vielen Fällen wird es sinnvoll sein, eine Möglichkeit der individuellen Drehzahleinstellung durch den Benutzer vorzusehen, damit dieser die Drehzahl so einstellen kann, dass der seiner Beobachtung unterliegende Abpumpmaterialstrom möglichst groß ist.

Allgemein ist die Fassfolgeplatte 3 bevorzugt als runde Platte mit einer Öffnung in der Mitte, der sogenannten Abzugsöffnung 4, aufgebaut. Diese Abzugsöffnung 4 fungiert als Saugöffnung, an der der Saugstutzen der Pumpe 5 angebracht wird, idealerweise in der Mitte der Platte, um die Wege des Materials aus allen Richtungen bis zur Saugöffnung so gering wie möglich zu halten.

Die Flachdichtung 12 an der Fassfolgeplatte 3 dient als Dichtung zwischen der Fassfolgeplatte 3 und dem Behälter 2. Bevorzugt ist bei diesem Ausführungsbeispiel die Breite der Flachdichtung 12 möglichst gering gehalten (Breite < 2x Dicke der Flachdichtung 12), damit diese Flachdichtung 12 sich nicht umklappen kann und das Material an der Seite vorbeigedrückt wird.

Um die Funktion des Abscherens zu gewährleisen, muss mindestens eine Scherleiste 8 als Agitator 7 verbaut sein. Bevorzugt ist jedoch eine Anzahl von mindestens zwei bzw. von drei Scherleisten. Dabei macht der Einbau von mehr als sechs oder zumindest von mehr als acht Scherleisten 8 im Regelfall keinen spürbaren Weiterverbesserungseffekt aus und sollte daher unterbleiben.

Die Scherleisten 8 tragen, wie erwähnt, bevorzugt jeweils einen Zinnenkranz 10 mit Zinnen, die bevorzugt eine Berg-Tal-Kombination ausbilden. Der "Berg" hat die Gesamthöhe hges von der Fassfolgeplatte 3 bis zum höchsten Punkt des Berges. Das "Tal" hat die Höhe h1 vom Tal bis zur Fassfolgeplatte 3. Die Höhe h2 beschreibt dann die Differenz zwischen Berg und Tal.

Die Scherleisten können somit in zwei Bereiche eingeteilt werden. Die Höhe h1 ist voll durchgängig auf dem gesamten Radius der Fassfolgeplatte 3 und ist somit die hydraulische Fläche, die durch die Drehbewegung immer voll im Eingriff ist und als Führung, bzw. Leitblech dient, um das Material in Richtung Mitte zur Saugöffnung zu fördern. Die Höhe h1 sollte mindestens 0,05% des Durchmessers der Fassfolgeplatte 3 betragen. Die Maximalhöhe ist theoretisch nicht begrenzt, aber ab einer Höhe von 5% des Fassfolgeplattendurchmessers ist es aus praktischer Sicht sinnlos. Sobald die Scherleisten 8 zu hoch werden, ist es zwar technisch noch möglich, aber die Kräfte und Drehmomente, die aufgebracht werden müssen, um diese großen Scherleisten 8 durch das Material zu bewegen, werden extrem hoch und unwirtschaftlich.

Die Höhe h2 hingegen ist - in dem hier abgebildeten, bevorzugten Fall - nicht auf dem gesamten Radius durchgängig und hat immer einen Berg- und einen Talbereich. Hier ist der Bergbereich im Eingriff im Material und erzeugt in der nachfolgenden Schicht die notwendige Scherung, um die Viskosität herabzusetzen und die Fließfähigkeit herzustellen. Sobald durch diesen Bereich das Material fließfähig gemacht wurde, wird es dann durch den Führungsbereich h1 hin zur Saugöffnung bewegt. Die Höhe h2 sollte bevorzugt im Wesentlichen der Höhe h1 entsprechen. Wie die Berge bzw. Täler ausgeführt werden, ist variabel. So ist die in den Figuren dargestellte gezackte Struktur des Zinnenkranzes 10 bevorzugt, es sind jedoch auch andere Strukturen, wie beispielsweise Wellenkonturen, möglich.

Die Scherleisten 8 des ersten gezeigten bevorzugten Ausführungsbeispiels sind bevorzugt nicht identisch bzw. symmetrisch. Berge bzw. Täler sind immer versetzt angeordnet. Von radial innen nach radial außen betrachtet beginnt die eine Scherleiste 8 mit einem Berg und die andere Scherleiste 8 mit einem Tal. Dies zieht sich bis nach radial außen so weiter. Somit hat die eine Scherleiste 8 ganz außen ein Tal und die andere einen Berg. Durch die Drehbewegung folgt somit immer ein Berg auf ein Tal und ein Tal auf einen Berg und es wird zwangsweise eine Scherung erzeugt
Die Scherleisten 8 des ersten bevorzugten Ausführungsbeispiels weisen zudem bevorzugt einen Radius auf. Der Radius der Scherleisten 8 ist hierbei bevorzugt 1/4 des Durchmessers der Fassfolgeplatte 3. Darüber hinaus ist die Drehrichtung und die Biegung der Scherleisten 8 bevorzugt so aufeinander abgestimmt, dass durch die Drehbewegung das Material nach innen gefördert wird; hin zum Mittelpunkt der Fassfolgeplatte 3.

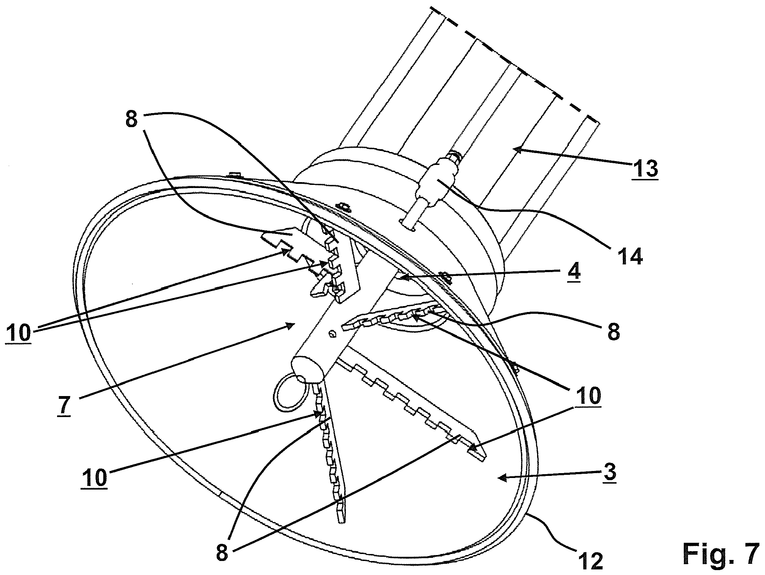

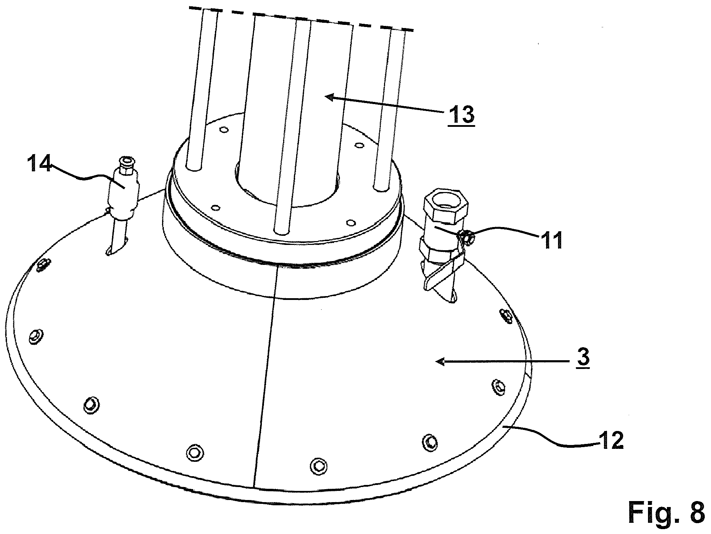

Durch eine konische Ausführung der Fassfolgeplatte 3 (ähnlich einem Kegel, siehe Fig. 7 und Fig. 8) würde das Hinabdrücken der Fassfolgeplatte 3 noch mehr dazu beitragen, das Material in die Mitte zur Saugöffnung der Pumpe bzw. zur Abzugsöffnung 4 zu bewegen. Der Agitator 7 besteht wiederum aus Scherleisten 8 mit Zinnenkranz 10, wobei hierbei bevorzugt mindestens 4 Scherleisten verwendet werden.

Die Fassfolgeplatte 3 weist zudem bevorzugt mindestens ein Entlüftungsventil 11 und mindestens einen Druckluftanschluss 14 auf.

Das Entlüftungsventil 11 wird geöffnet, wenn die Fassfolgeplatte in das Behälterinnere abgesenkt wird oder sonst wie durch Relativbewegung zum Fassboden in Position gebracht werden soll, und muss ohne ein Luftpolster zwischen ihr und der zu fördernden bzw. zu entnehmenden Masse einschließen. Der Druckluftanschluss 14 hat eine andere Bewandtnis. Über ihn kann gezielt Druckluft aufgegeben werden (bei gleichzeitig geschlossenem Entlüftungsventil 11), um die Fassfolgeplatte 3 und den Fassboden relativ zueinander wieder auseinanderzudrücken, wenn der Behälter 2 entleert ist und ein neuer Behälter 2 eingesetzt werden soll.

Allgemein ist das Entleerungssystem 1 zudem bevorzugt mit einer Heizvorrichtung ausgestattet, die vor allem das Material im Sammelraum 6 zusätzlich erwärmt. Idealerweise ist es so, dass das gesamte Entleerungssystem 1 nicht - sogar an verschiedenen Orten - intern beheizt wird, sondern in einer Einhausung untergebracht ist, die es erlaubt, das gesamte Entleerungssystem 1 als Ganzes zu temperieren, idealerweise bis auf eine Temperatur im Bereich von oder bis heran an 60° C.

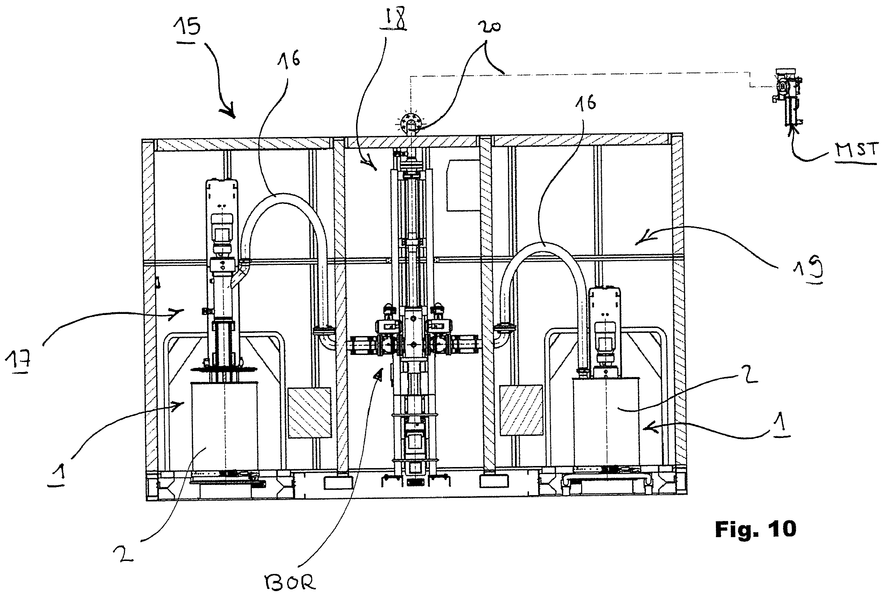

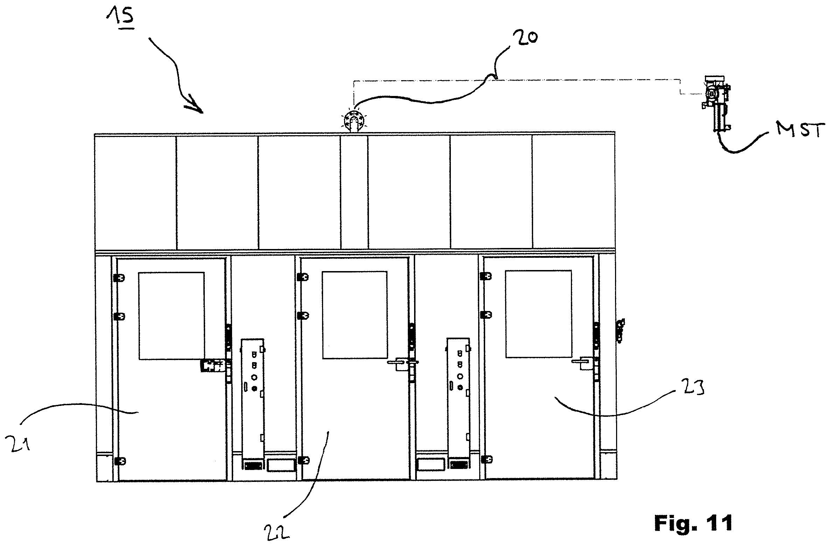

Eine solche Anlage mit Einhausung offenbaren die Fig. 10 und 11. Wie man sieht, definiert die Einhausung mindestens zwei, besser drei im Wesentlichen voneinander getrennte Kompartments 17, 18, 19. Bevorzugt ist jedes dieser Kompartments beheizt, meist gesteuert oder geregelt beheizt, auf eine Temperatur oberhalb der Umgebungstemperatur, bzw. auf eine Temperatur, die das Abpumpen zwar für sich allein gesehen in den meisten Fällen noch nicht ermöglicht, aber mehr als nur unwesentlich erleichtert. Zwei Kompartments 17, 18 enthalten je ein Entleerungssystem 1 der erfindungsgemäßen Bauart, bevorzugt komplett.

Idealerweise wird alternierender Betrieb gefahren.

Im hier abgebildeten Fall läuft das rechts gezeigte Entleerungssystem 1 gerade, d. h. es pumpt den Inhalt des ihm zugeordneten fassartigen Behälters 2 ab. Sodann gibt es den Inhalt bevorzugt über eine U-förmige Leitungsschlaufe 16 nach außen ab, bevorzugt an eine gleich noch näher zu erörternde Boosterpumpe BOR. Von der Boosterpumpe wird die Masse über eine Speiseleitung 20 z. B. an das Mundstück MST oder eine Art Auftragspistole abgegeben, mit dem oder der die aus dem fassartigen Behälter geleerte Masse in situ an ihrem bestimmungsgemäßen Verwendungsort aufgetragen wird.

Im hier abgebildeten Fall steht im linken Kompartment 17 ein weiteres, bevorzugt nochmals das gleiche Entleerungssystem. Es wird gerade durch Einsetzen eines frischen oder anderen fassartigen Behälters 2 nachgeladen. Sobald der fassartige Behälter 2 des Systems im rechten Kompartment 19 erschöpft ist, wird (vollständig oder jdf. im Wesentlichen) übergangslos aus dem fassartigen Behälter 2 des Systems im linken Kompartment 17 weitergefördert, bevorzugt so, dass die Masse im Leitungsstrang 20 hinter der Boosterpumpe kontinuierlich in Bewegung bleibt, was u. U. zu Schwierigkeiten führende Wiederanfahrvorgänge von im Leitungsstrang hinter der Boosterpumpe zum Stillstand gekommener Masse vermeiden hilft.

Die Kompartments 17 und 19 mit den Systemen weisen vorzugsweise jeweils mindestens einen nicht figürlich dargestellten Lagerplatz auf, an dem schon ein weiterer fassartiger Behälter 2 eingelagert und dadurch hinreichend lange temperiert werden kann, noch während das System aus einem anderen fassartigen Behälter abpumpt.

Aufgrund der thermisch voneinander getrennten und bevorzugt jeweils durch eine eigene Tür 21, 22, 23 oder Klappe unmittelbar von außen zugänglichen Kompartments kann das jeweilige Entleerungssystem nachgeladen und/oder gewartet werden, ohne dass sein zeitweiliges Auskühlen zu befürchten ist. Die Tür oder Klappe hat vorzugsweise eine verglaste Inspektionsöffnung, über die das Innere des Kompartments kontrolliert werden kann, ohne die Tür oder Klappe öffnen zu müssen, vgl. Fig. 11.

Ideal ist es, wenn zumindest die Entleerungssystem-Kompartments so beschaffen sind, dass in ihnen auch bei geschlossener Tür oder Klappe gearbeitet werden kann. Dies ist nützlich, um auch in Bezug auf das vom momentanen Wechsel oder der momentanen Wartungsarbeit betroffene Kompartment bestmöglich ein Auskühlen zu verhindern, das die Wiederanfahr- oder Förderbereitschaft beeinträchtigen könnte.

Wenn die zu fördernde Masse erst einmal durch eines oder beide der erfindungsgemäßen Entleerungssysteme angesaugt und unter Verringerung seiner Viskosität in Bewegung versetzt worden ist, dann wird es einer Boosterpumpe möglich, ihren Teil dazu beizutragen, um die Masse über eine längere Rohr- und/oder Schlauchstrecke bis zu ihrem Verbrauchsort zu fördern. Zu diesem Zweck ist vorzugsweise auch das die Boosterpumpe im Regelfall komplett aufnehmende Kompartment temperiert und idealerweise thermisch von den anderen Kompartments getrennt.

Von der Boosterpumpe aus wird die gepumpte Masse vorzugsweise über das Dach der Einhausung nach oben ausgegeben, weil es für die Gleichmäßigkeit der Masseausgabe am Mundstück günstig ist, wenn ihm die Masse am Leitungsende im Fallstrom zugeführt werden kann.

### ALLGEMEINE ANMERKUNGEN

Zusätzlich, d. h. unabhängig und abhängig von den schon aufgestellten Ansprüchen wird zu gegebener Zeit auch Schutz beansprucht für die Verwendung des von einem oder mehreren der Ansprüche beschriebenen Entleerungssystems zum Entleeren von einem Fass oder Behältnis, das Modelliermasse enthält, die dazu bestimmt ist, eine in Entwicklung befindliche Fahrzeugkarosserie nachzubilden, bevorzugt mindestens im Maßstab 1:3, idealerweise - zumindest im Wesentlichen oder vollständig - im Maßstab 1:1.

Idealerweise ist die vorgenannte Modelliermasse eine Modelliermasse auf der Basis mindestens eines Wachses und enthält bevorzugt Füllstoffe und/oder Farbpigmente.

Oft oder sogar im Regelfall ist die vorgenannte Modelliermasse so beschaffen, dass sie bei Temperaturen unterhalb der Temperatur, bei der sie sich nachteilig zu verändern und/oder zu zersetzen beginnt und/oder Entflammung droht, im unbewegten Zustand nicht hinreichend viskos ist, um gepumpt werden zu können.

Oft oder sogar im Regelfall hat die vorgenannte Modelliermasse eine (entlüftete) Dichte von 0,8 g/cm3 bis 1,2 g/cm3 und/oder eine Verarbeitungstemperatur von 45° C bis 65° C und/oder bei 20° C eine Shore-Härte A von 65 bis 80.

Die erfindungsgemäße Agitation wird bevorzugt so gestaltet, dass sich die aus dem Behälter zu entleerende Masse oder Modelliermasse nach der Agitation im Behälter - bevorzugt ohne die Notwendigkeit weiterer solcher Agitation an einem Nachfolgeort - über eine Entfernung von mehr als 6 m oder zumindest mehr als 4 m pumpen lässt. Idealerweise kann sogar noch weiter gepumpt werden, oder jedenfalls über die Distanz vom Behälter bis zu dem rohr- oder schlauchgespeisten Dispenser oder Mundstück, über den oder das der Anwender die Modelliermasse an dem Verbrauchsort, also meist auf der im Werden begriffenen Modellkarosse, ausgibt.

Zur Bewältigung größerer Entfernungen können ggf. Relaisstationen eingesetzt werden. Denkbar sind Stationen, in denen die Masse in einen Pufferbehälter oder Pufferspeicher gegeben wird, wo sie nochmals einer erfindungsgemäßen Agitation unterzogen wird, um dann von dort aus erneut weitergepumpt werden zu können.

Um die Pumpfähigkeit zu verbessern bzw. zu vergleichmäßigen, kann es sinnvoll sein, den fassartigen Behälter samt Inhalt, das ihn haltende Gestell und womöglich auch den Drehteller, auf dem er steht, jedenfalls einschließlich der aus ihm entnehmenden Schraubenspindelpumpe vollständig in einer beheizten Einhausung unterzubringen - und zwar in vielen Fällen schon mehrere Stunden vor Beginn des Abpumpens.

Unabhängig von den bereits aufgestellten Ansprüchen wird zu gegebener Zeit auch eigenständiger Schutz für folgendes Entleerungssystem beansprucht, mit oder ohne Bezug zu den bereits aufgestellten Ansprüchen oder Unteransprüchen: Entleerungssystem 1 zum Entleeren von pastösem Material aus bevorzugt fassartigen Behältern 2 mit einer - bevorzugt stempelartig in das Behälterinnere absenkbaren - Fassfolgeplatte 3, die eine Abzugsöffnung 4 aufweist, mit einer mit der Abzugsöffnung 4 in Wirkverbindung stehenden Pumpe 5 zum Abziehen des im Sammelraum 6 zwischen Fassboden und Fassfolgeplatte eingeschlossenen Materials, dadurch gekennzeichnet, dass mindestens ein Mittel - vorzugweise ein Vibrator, ein Oszillator, ein Rüttler und/oder ein Ultraschallgeber - vorgesehen ist, das dem in dem Sammelraum vorhandenen Material mindestens im Bereich der Abzugsöffnung eine Bewegung, die idealerweise eine Scherbewegung umfasst oder im Wesentliche eine solche darstellt, aufzwingt, sodass seine Viskosität im Bereich der Abzugsöffnung herabgesetzt wird.

### BEZUGSZEICHENLISTE

- 1: Entleerungssystem
- 2: fassartiger Behälter
- 3: Fassfolgeplatte
- 4: Abzugsöffnung
- 5: Motor der Pumpe
- 6: Sammelraum
- 7: Agitator
- 8: Scherleiste
- 9: Behälterträger
- 10: Zinnenkranz
- 11: Entlüftungsventil
- 12: Flachdichtung
- 13: Hohlsäule
- 14: Druckluftanschluss
- 15: Einhausung
- 16: U-förmige Leitungsschlaufe
- 17: erstes Kompartment
- 18: zweites Kompartment
- 19: drittes Kompartment
- 20: Speiseleitung
- 21: Tür oder Klappe
- 22: Tür oder Klappe
- 23: Tür oder Klappe

- B: radiale Breite Flachdichtung
- D: axiale Dicke Flachdichtung
- BOR: Boosterpumpe
- MST: Mundstück

- hges: Gesamthöhe "Berg"
- h1: Höhe "Tal"
- h2: Differenz zwischen Berg und Tal

## Patentansprüche

1. Entleerungssystem (1) zum Entleeren von pastösem Material aus fassartigen Behältern (2) mit einer - bevorzugt stempelartig in das Behälterinnere absenkbaren - Fassfolgeplatte (3), die eine Abzugsöffnung (4) aufweist, mit einer mit der Abzugsöffnung (4) in Wirkverbindung stehenden Pumpe (5) zum Abziehen des im Sammelraum (6) zwischen Fassboden und Fassfolgeplatte (3) eingeschlossenen Materials, **dadurch gekennzeichnet, dass** in dem Sammelraum (6) mindestens ein Agitator (7) vorgesehen ist, der dem im Sammelraum (6) eingeschlossenen Material eine Bewegung relativ zur Fassfolgeplatte (3) aufzwingt.

2. Entleerungssystem (1) nach Anspruch 1, **dadurch gekennzeichnet, dass** der Agitator (7) mindestens eine Scherleiste (8) ist, die an der dem Sammelraum (6) zugewandten Stirnfläche der Fassfolgeplatte (3) befestigt ist und von dort aus in den Sammelraum (6) ragt.

3. Entleerungssystem (1) nach Anspruch 2, **dadurch gekennzeichnet, dass** die Fassfolgeplatte (3) rotationsfest gehalten ist und das Entleerungssystem (1) einen rotierend antreibbaren Behälterträger (9) aufweist.

4. Entleerungssystem (1) nach Anspruch 1, **dadurch gekennzeichnet, dass** der Agitator (7) mindestens eine Scherleiste (8) ist, die an einem Wirkfortsatz des Pumpenrotors gehalten ist, der durch die Fassfolgeplatte (3) hindurch in den Sammelraum (6) hineinragt, wobei der zu entleerende Behälter (2) vorzugsweise rotationsfest gehalten wird.

5. Entleerungssystem (1) nach dem unmittelbar vorhergehenden Anspruch, **dadurch gekennzeichnet, dass** der besagte Wirkfortsatz mit dem Pumpenrotor über ein Reduktionsgetriebe verbunden ist, sodass er mit gegenüber dem Pumpenrotor variabler Drehzahl rotiert.

6. Entleerungssystem (1) nach Anspruch 2 oder 4, **dadurch gekennzeichnet, dass** die mindestens eine Scherleiste (8) auf ihrer unmittelbar dem Behälterboden zugewandten Stirnseite einen Zinnenkranz (10) trägt.

7. Entleerungssystem (1) nach mindestens einem der Ansprüche 2, 4 oder 6, **dadurch gekennzeichnet, dass** mehrere Scherleisten (8) mit Zinnenkranz (10) vorgesehen sind, und die Zinnen der in Drehrichtung nachfolgenden Scherleiste (8) eine abweichende Radialposition einnehmen als die Zinnen der vorangehenden Scherleiste (8).

8. Entleerungssystem (1) nach mindestens einem der Ansprüche 2, 4 oder 6, **dadurch gekennzeichnet, dass** die in Rotationsrichtung voreilende Seite der mindestens einen Scherleiste (8) konkav gekrümmt ist.

9. Entleerungssystem (1) nach mindestens einem der Ansprüche 2, 4, 6 oder 7, **dadurch gekennzeichnet, dass** das Ende der mindestens einen Scherleiste (8) bis unmittelbar an die Abzugsöffnung (4) heranreicht und idealerweise tangential zu der Leibung der Abzugsöffnung (4) ausläuft.

10. Entleerungssystem (1) nach einem der vorhergehenden Ansprüche, **dadurch gekennzeichnet, dass** die Fassfolgeplatte (3) mindestens ein Entlüftungsventil (11) aufweist zum Abbau eines eventuellen Luftpolsters im Sammelraum (6).

11. Entleerungssystem (1) nach einem der vorhergehenden Ansprüche, **dadurch gekennzeichnet, dass** die Fassfolgeplatte (3) auf ihrer dem Sammelraum (6) zugewandten Seite kegelig ausgeführt ist, sodass die radialen Außenränder der Fassfolgeplatte (3) ihrer Abzugsöffnung (4) beim Absenken in den Behälter (2) voraneilen, bevorzugt mit einem Kegelwinkel zwischen weniger als 1° und maximal 10°, besser nur maximal 5°.

12. Entleerungssystem (1) nach einem der vorhergehenden Ansprüche, **dadurch gekennzeichnet, dass** die Fassfolgeplatte (3) an ihrem Außenumfang eine Flachdichtung (12) - und vorzugsweise eine Lippendichtung bildende Flachdichtung (12) - trägt, die beim Absenken entgegen der Absenkrichtung umgebogen wird - für deren radiale Breite B und axiale Dicke D Folgendes gilt: B < 2 x D.

13. Entleerungssystem (1) nach einem der vorhergehenden Ansprüche, **dadurch gekennzeichnet, dass** die Fassfolgeplatte (3) mit ihrer Abzugsöffnung (4) an einer relativ zum entleerenden Behälter (2) heb- und senkbaren Hohlsäule (13) befestigt ist, in deren Innerem eine Exzenterschneckenpumpe angeordnet ist, um durch die Abzugsöffnung (4) Material anzusaugen.

14. Verfahren zum Entleeren von pastösem Material aus fassartigen Behältern (2) durch Abpumpen bevorzugt unter Einsatz eines Entleerungssystems (1) nach einem der vorhergehenden Ansprüche, **dadurch gekennzeichnet, dass** das zu pumpende Material - vorzugsweise erwärmt und dann - durch einen Agitator (7) gelockert wird.

15. Verfahren nach Anspruch 14, **dadurch gekennzeichnet, dass** der Agitator (7) Kräfte auf das zu pumpende Material ausübt, die zumindest einen Teil des Materials in Richtung hin zum Ansaugstutzen einer Pumpe (5) bewegen.

16. Verwendung eines Agitators (7) bevorzugt mit den Agitatormerkmalen mindestens eines der vorhergehenden Ansprüche, zur Verbesserung, oder bevorzugt, erstmaliger Herstellung der Fließfähigkeit von abzupumpendem Gut in unmittelbar radialer Nachbarschaft der Ansaugöffnung einer Pumpe (5), idealerweise einer Exzenterschneckenpumpe, die durch eine Fassfolgeplatte (3) hindurch abpumpt.
